# EUROPÄISCHE PATENTANMELDUNG

(11) **EP 3 498 421 A1**
(43) Veröffentlichungstag der Anmeldung: **19.06.2019**
(21) Anmeldenummer: 18210305.1
(22) Anmeldetag: 05.12.2018
(51) Int. Cl.: B23Q 3/155

(54) **WERKZEUGWECHSELEINRICHTUNG**

(30) Priorität: 12.12.2017 DE 202017107552 U
(71) Anmelder: Starrag GmbH, 09117 Chemnitz (DE)
(72) Erfinder: Bräuer, Antonio, 09117 Chemnitz (DE); Muck, Andreas, 09235 Burkhardtsdorf (DE); Ludewig, Alexander, 09212 Limbach-Oberfrohna (DE); Haubold, Uwe, 09212 Limbach-Oberfrohna (DE)
(74) Vertreter: Rumrich, Gabriele

(57) **Zusammenfassung**

Die Erfindung betrifft eine Werkzeugwechseleinrichtung für eine Werkzeugmaschine, aufweisend einen hydraulischen Schwenkantrieb und einen Werkzeuggreifer, wobei der Schwenkantrieb an seinem Umfang eine zumindest bereichsweise umlaufende Vertiefung aufweist, wobei bei einer Drehbewegung des Schwenkantriebs mittels eines in die Vertiefung eingreifenden Elements eine Wechselwirkung entsteht derart, dass eine Aushubbewegung auf eine translatorisch und rotatorisch bewegliche Abtriebswelle übertragbar ist. Der Werkzeuggreifer ist direkt oder indirekt mit der Abtriebswelle verbunden. Mittels eines stirnseitig an dem Schwenkantrieb befindlichen Mitnehmers, der in ein Malteserrad eingreift, ist die Schwenkbewegung auf den Werkzeuggreifer übertragbar. Das Malteserrad ist auf einer Rastsicherung verschiebbar derart, dass die Rastsicherung außerhalb des Schwenkvorgangs ein Drehen des Werkzeuggreifers verhindert.

## Beschreibung

Die Erfindung betrifft eine Werkzeugwechseleinrichtung und findet insbesondere für den Werkzeugwechsel in Werkzeugmaschinen Anwendung.

Aktuelle Werkzeugwechsellösungen nutzen für den automatischen Werkzeugwechselvorgang in der Regel voneinander getrennte Antriebe zur Realisierung der notwendigen Bewegungsabläufe. Aufgrund der Verwendung mehrerer voneinander getrennter Antriebe ergibt sich ein komplexer Antriebsaufwand. Bevor eine neue Bewegung freigegeben wird muss zuvor immer die aktuelle Position abgefragt und bestätigt werden. Daraus ergeben sich Pausen für den Bewegungsablauf wodurch sich die Werkzeugwechselzeiten und respektive die Span-zu-Span-Zeiten verlängert werden. Des Weiteren ergeben sich aufgrund der nicht "fließenden" Bewegung Schwingungen, die einen negativen Einfluss auf die Arbeitsgenauigkeit der Werkzeugmaschine haben können. Werkzeugwechselsysteme mit einem festen Zwanglauf sind nicht für alle Bedürfnisse geeignet und bieten unter Umständen nicht genug Flexibilität für jeden Anwendungsfall.

Aus dem Stand der Technik sind Werkzeugwechselvorgänge unter Verwendung eines hydraulischen Schwenkantriebs bekannt. Der Schwenkantrieb ist dabei nur für den Schwenkvorgang um 180° zuständig. Der Aushub wird mittels eines hydraulisch angesteuerten Hubzylinders umgesetzt. Der Aushub verschiebt Teile des Wechslers inklusive des hydraulischen Schwenkantriebs in Richtung der Spindelrichtung entlang der Z-Achse.
Die X-Bewegung in Richtung zur Spindel, Warteposition und Magazin wird über zwei hydraulisch angesteuerte Hubzylinder nach dem Doppelhubprinzip realisiert. Dabei werden zwei unterschiedlich große Hübe verwendet, zum einen ein Hub Magazin-Mitte und zum anderen ein Hub Mitte-Spindel.
Nachteilig bei dieser Variante sind unter anderem ein ruckbehafteter und unterbrochener Bewegungsablauf, viele bewegliche Teile sowie eine unzureichende Abschirmung von Sensoren gegen die Funktion beeinflussende Verschmutzungen. Des Weiteren geht durch die getrennten Bewegungsabläufe wertvolle Werkzeugwechselzeit verloren, da jede Endlage zunächst durch Sensoren abgefragt werden muss.

Aus der Druckschrift EP 2 318 178 B1 ist ein Werkzeugwechsler für Werkzeugmaschinen, insbesondere für Fräsmaschinen mit einem, am freien Ende einer axial verschiebbaren und drehbar gelagerten Welle montierten Werkzeugdoppelgreifer bekannt. Der Werkzeugdoppelgreifer weist zwei diametral gegenüberliegende zangenförmige Werkzeughalter auf. Des Weiteren weist der Werkzeugwechsler einen mit der Welle kinematisch gekoppelten Antriebsmotor für die Linear- und die Drehbewegungen des Werkzeug-Doppelgreifers auf. Mittels Getriebemitteln erfolgt ein Umsetzen der Rotation der Motorwelle des Antriebsmotors in die Linear- und die Drehbewegung des Werkzeug-Doppelgreifers. Nachteilig sind die Notwendigkeit eines Schneckenantriebs mit einem Servomotor oder polumschaltbarem Drehstrommotor, da sowohl ein Servoantrieb als auch ein Schneckengetriebe sehr kostenintensiv sind.

In der Druckschrift DE 37 35 384 C2 wird eine an einer Werkzeugmaschine vorgesehene Werkzeugwechseleinrichtung beschrieben, die mehrere Nocken umfasst, die einstückig an einer Antriebswelle ausgebildet sind, sowie entsprechend zugeordnete mechanische Abgriffsteile, die durch die Nocken betätigbar sind. Eine erste Hülse ist drehbar an dem Hauptspindelkopf gelagert, wobei eine zweite Hülse gemeinsam mit der ersten Hülse drehbar, jedoch in deren axialer Richtung bewegbar ist. Ein Endabschnitt der genannten zweiten Hülse ist mit einem Dreharm versehen, an dem Werkzeughaltegreifer und eine Einrichtung zum Öffnen und Schließen der Greifer vorgesehen sind. Durch Drehung des Dreharmes um eine Achse der zweiten Hülse und durch eine Verschiebung des Dreharmes in axialer Richtung, bezogen auf die zweite Hülse, wird ein Werkzeug in der Hauptspindel durch ein Werkzeug in dem Werkzeugmagazin ersetzt. In der genannten Druckschrift erfolgt die Schubbewegung über eine Nutkurve, alle anderen Bewegungen werden über Nockensätze umgesetzt. Nachteilig sind die aufwendige Herstellung und Einstellung aller Funktionen aufeinander. Aufgrund der vielen Einstellungen, die vorgenommen werden müssen sind diese sehr störanfällig.

Die Druckschrift DE 10 2008 059 422 A1 beschreibt einen Werkzeugwechsler für Werkzeugmaschinen mit mindestens einem verdrehbaren Werkzeuggreifer und einer heb- und senkbaren sowie um eine Drehachse verdrehbaren Tragsäule für den Werkzeuggreifer. Des Weiteren weist der Werkzeugwechsler ein mechanisches Kurvengetriebe zum Erzeugen der Hub- und Drehbewegungen des Werkzeuggreifers auf. Das Kurvengetriebe besteht aus einem Antriebsmotor, einer Kurventrommel und einem Zwischengetriebe. Die Kurventrommel weist auf ihrer oberen Stirnseite einen Mitnehmer für den Drehantrieb des Werkzeuggreifers und an ihrer Umfangsfläche eine Hubkurve für die Hubbewegung des Werkzeuggreifers auf. Der stirnseitige Mitnehmer treibt ein Malteserrad an, welches auf einer zur Drehachse des Werkzeuggreifers achsparallelen Welle gelagert ist. Das Malteserrad, die Kurventrommel und die Tragsäule des Werkzeuggreifers sind achsparallel hintereinander gelagert.
Die genannte Lösung ist mechanisch sehr aufwendig und unflexibel, da ein kompletter mechanischer Zwanglauf vorliegt. Es sind keine Variabilität im Ablauf und keine Schaltfunktionen möglich.

Aus der Druckschrift DE 43 00 745 A1 ein Werkzeugwechsler für Werkzeugmaschinen bekannt, der zum Verfahren des Werkzeuggreifers in Axialrichtung eine Kurventrommel aufweist, in deren Mantel eine Kurvenbahn in Form einer in sich geschlossenen Nut ausgebildet ist. In diese Nut greift ein mit dem Werkzeuggreifer verbundener Steuervorsprung ein. Die Kurventrommel ist mit einem Antriebsmotor gekoppelt, wobei die Drehbewegung der Kurventrommel in eine Hub- und Senkbewegung des Werkzeuggreifers umgesetzt wird. Zum Verdrehen des Werkzeuggreifers dient ein gesondertes Schwenkgetriebe, das ebenfalls vom Antriebsmotor angetrieben wird und eine Kurvenscheibe sowie einen Steuerarm aufweist, der über einen Steuernocken in eine Steuernut in der Kurvenscheibe eingreift. Bei diesem bekannten Wechsler erfolgt somit der Antrieb für die Hub- und Senkbewegungen des Werkzeuggreifers über die Kurventrommel und der Drehantrieb des Werkzeug-Greifers über die gesonderte Kurvenscheibe, was neben einem relativ großen Platzbedarf auch einen erheblichen technischen Aufwand verlangt.

Aufgabe der Erfindung ist es, eine Werkzeugwechseleinrichtung zu entwickeln, die eine Reduzierung bzw. Minimierung von Schwingungen durch den Werkzeugwechselvorgang sowie eine Reduzierung der Werkzeugwechselzeit ermöglicht. Des Weiteren soll die Anzahl der Antriebe auf einen Antrieb reduziert werden.

Diese Aufgabe wird mit den kennzeichnenden Merkmalen des ersten Patentanspruchs gelöst.

Vorteilhafte Ausgestaltungen ergeben sich aus den Unteransprüchen.

Die Erfindung betrifft eine Werkzeugwechseleinrichtung für eine Werkzeugmaschine zum automatisierten Wechsel von Werkzeugen, wobei die Werkzeuge vorzugsweise in über eine Kette verfahrbaren Speicherplätzen angeordnet sind, aufweisend einen hydraulischen Schwenkantrieb und einen Werkzeuggreifer, wobei der Schwenkantrieb an seinem Umfang eine zumindest bereichsweise umlaufende Vertiefung aufweist, wobei bei einer Drehbewegung des Schwenkantriebs mittels eines in die Vertiefung eingreifenden Elements eine Wechselwirkung entsteht derart, dass eine Aushubbewegung durch Drehen des Schwenkantriebs realisierbar ist und dass mittels des Schwenkantriebs eine direkte oder indirekte Drehung des Werkzeuggreifers um 180° erfolgt. Die Aushubbewegung wirkt auf eine translatorisch und rotatorisch bewegliche Abtriebswelle, wobei des Weiteren der Werkzeuggreifer direkt oder indirekt mit der Abtriebswelle verbunden ist. Die Werkzeugwechseleinrichtung weist des Weiteren einen, an dem Schwenkantrieb stirnseitigen Mitnehmer für ein Malteserrad auf, wobei mittels des stirnseitigen Mitnehmers eine Drehbewegung auf das Malteserrad übertragbar ist, die an die translatorisch und rotatorisch bewegliche Abtriebswelle weiterleitbar ist. Dies kann über ein, mit dem Malteserrad über eine Übertragungswelle verbundenen Zahnrad erfolgen, dass in ein Ritzel auf der Abtriebswelle eingreift.
Das Malteserrad ist derart ausgebildet, dass es auf eine Rastsicherung verschiebbar ist, wobei die Rastsicherung, außerhalb des Schwenkvorgangs eine Drehsicherung des Werkzeuggreifers bewirkt.

Der erfindungsgemäße Werkzeugwechselvorgang erfolgt unter Verwendung der Vertiefung mit einer fließenden Bewegung.
Mittels des in der Vertiefung geführten eingreifenden Elements, welches in Verbindung mit einer Profilschienenführung steht, wird die Aushubbewegung auf die translatorisch und rotatorisch bewegliche Welle übertragen.
Ein Werkzeugwechsel kann dabei die Bewegungsabläufe Ausheben - Drehen - Einsetzen oder Ausheben - Einsetzen betreffen.

Die Vertiefung in Form einer Nutkurve für den Aushubvorgang des Werkzeugs auf dem Umfang des Schwenkantriebs eingebracht, wobei die Nut für einen ruckfreien Bewegungsablauf in Form einer definierten Funktion ausgebildet ist. Die Nut kann in einer vorteilhaften Ausgestaltung in einer Freiform ausgebildet sein.

Vorteilhafter Weise bilden die Endlagen des Schwenkantriebs den eingesetzten Zustand des Werkzeuggreifers ab. Des Weiteren ist die Nutkurve vorteilhafter Weise im Bereich der Endlagen verlängert, wobei bei Erreichen der Endlage des Schwenkantriebs eine Erschütterung vermeidbar und Drehwinkelabweichungen ausgleichbar sind. Somit erfolgt eine Reduzierung beziehungsweise Minimierung von Schwingungen durch den Werkzeugwechselvorgang und ein ruckfreier Bewegungsablauf.

Die Länge des Schwenkantriebs ist auf den zu realisierenden Mindestaushub angepasst und kann für verschiedene Werkzeugaufnahmen skaliert werden.

Das Malteserrad ist mit dem Zahnrad verbunden, wobei das Malteserrad eine Schwenkbewegung mittels des Zahnrads auf das auf der Abtriebswelle befindliche Ritzel überträgt, wobei die Abtriebswelle translatorisch und rotatorisch beweglich ist. Das Übersetzungsverhältnis von Antrieb zu Abtrieb beträgt vorzugsweise i=0,5.

Der Mitnehmer ist derart ausgebildet, dass die Schwenkbewegung des Werkzeuggreifers durch das Eingreifen des Mitnehmers in das Malteserrad einleitbar ist, wobei ein vollständiger Werkzeugwechselzyklus im Zwanglauf vorliegt, wenn der Schwenkantrieb seine erste und zweite Endlage erreicht. Der genaue Punkt für den Beginn der Schwenkbewegung ist so gewählt, dass eine Überschneidung mit der restlichen noch durchzuführenden Aushubbewegung stattfindet. Der Punkt ist zudem so gewählt, dass eine Kollision der Werkzeugaufnahme mit seiner Umgebung ausgeschlossen werden kann.

Die Werkzeugwechseleinrichtung weist eine Nockensteuerung auf, wobei über die Nockensteuerung eine Verschiebung des geradverzahnten Zahnrads auf dem Ritzel mittels einer Schaltwelle mit Schaltgabel möglich ist, wobei gleichzeitig das Malteserrad axial um den gleichen Betrag verschoben wird. Durch den genannten Schaltvorgang wird das Malteserrad auf einer durchgehenden Rastsicherung gesichert und der stirnseitige Mitnehmer kann nicht in das Malteserrad eingreifen. Somit kann der Schwenkantrieb eine Aushubbewegung bis zu einem definierten Punkt durchführen und danach in die entgegengesetzte Drehrichtung in seine Ausgangslage zurückkehren.
Wird der Nocken betätigt wird auch ein zweiter auf der Schaltwelle befestigter Nocken axial versetzt, wobei dieser die Aufgabe der Entriegelung der Zange des Werkzeuggreifers hat.

Wenn die Schaltwelle nicht mehr geschaltet ist, kann über eine Druckfeder das Zahnrad/Malteserrad, automatisch zurückgesetzt werden. Dies ist der Fall, wenn nach erfolgtem Werkzeugwechsel das Zahnrad des einstufigen Zahnradgetriebes und/oder das Malteserrad des Malteserradgetriebes über die Druckfeder automatisch zurückgesetzt werden.

In einer vorteilhaften Ausgestaltung weist die Werkzeugwechseleinrichtung einen axial versetzen Nocken auf, mittels dem die Zange des Werkzeuggreifers entriegelbar ist.

Aus der erfindungsgemäßen Lösung ergeben sich mehrere Vorteile. Es ist nur noch ein Antrieb für den Werkzeugwechsel notwendig. Dies reduziert die Komplexität des Antriebs und der gesamten Wechseleinrichtung erheblich. Des Weiteren erfolgt durch die Nutzung der Nutkurve ein Bewegungsablauf ohne Unterbrechungen oder Erschütterungen. Zudem reduziert sich die Werkzeugwechselzeit erheblich. Durch eine mechanische Verriegelung/Schaltung ist eine Aushubbewegung ohne die Durchführung eines Schwenkvorgangs möglich, wodurch die Flexibilität erhöht wird. Aufgrund der Integration des Schwenkantriebs in den Zylinder mit der Zylinderkurve kann auf ein Zwischengetriebe verzichtet werden.
Dies führt zu einer Erhöhung der Werkzeugwechselgeschwindigkeit. Des Weiteren kann mittels Unterbrechung des Zwanglaufs ein zweiter Bewegungsablauf ermöglicht werden. Durch die Integration des Antriebs in den Zylinderkurvenzylinder wird der Platzbedarf der Wechseleinheit reduziert und die Trägheiten des Systems auf ein Minimum beschränkt.

Die erfindungsgemäße Werkzeugwechseleinrichtung kann sowohl horizontal als auch vertikal Anwendung finden. Eine Bewegung entlang der X-Achse wird vorzugsweise mittels eines weiteren Schwenkantriebs umgesetzt, wobei die Werkzeugwechseleinrichtung auf zwei Linearführungen gelagert und entlang dieser verfahrbar ist.

Die Erfindung wird nachfolgend an einem Ausführungsbeispiel und zugehörigen Zeichnungen näher erläutert.

Es zeigen:
- Figur 1: eine Werkzeugwechseleinrichtung mit geöffnetem Gehäuse,
- Figur 2: eine Werkzeugwechseleinrichtung mit Werkzeuggreifer,
- Figur 3: eine schematische Darstellung der Getriebeanordnung,
- Figur 4: eine seitliche Darstellung der Getriebeanordnung
- Figur 5: eine rückseitige Ansicht der Getriebeanordnung der Werkzeugwechseleinrichtung,
- Figur 6: schematische Darstellung der Getriebeanordnung in der Vorderansicht,
- Figur 7: eine schematische Darstellung der Rastsicherung,
- Figur 8: die Werkzeugwechseleinrichtung auf einem Schlitten zur Verfahrbarkeit entlang der x-Achse.

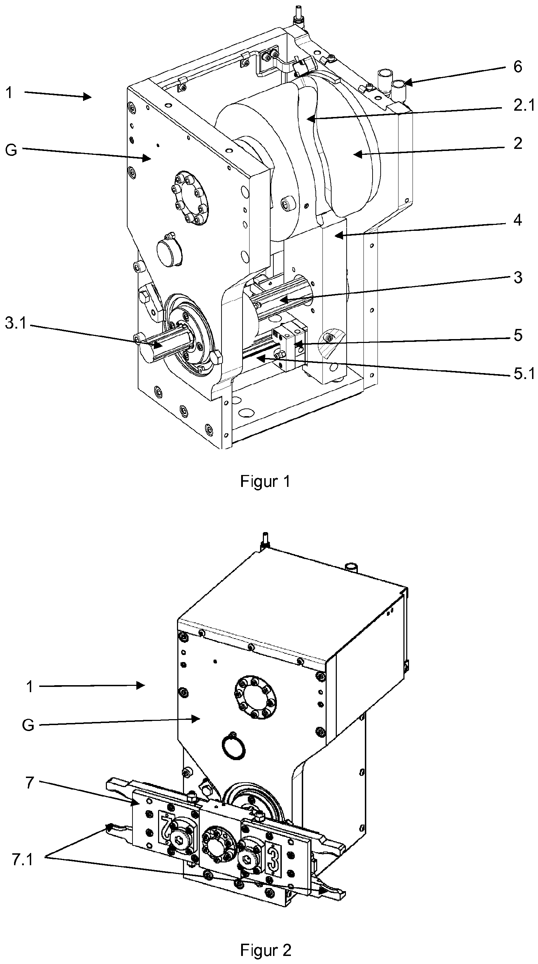

In Figur 1 ist eine erfindungsgemäße Werkzeugwechseleinrichtung 1 dargestellt, wobei die Werkzeugwechseleinrichtung ein Gehäuse G und darin angeordnet einen Schwenkantrieb 2 und eine, mit diesem über einzelne Getriebeglieder verbundene, translatorisch und rotatorisch bewegliche Abtriebswelle 3, an der ein Werkzeuggreifer befestigbar ist. Der Schwenkantrieb 2 weist an seinem Umfang eine zumindest bereichsweise umlaufende Vertiefung 2.1 auf, wobei bei einer Drehbewegung des Schwenkantriebs 2 mittels eines in die Vertiefung 2.1 eingreifenden Elements 4 eine Wechselwirkung entsteht derart, dass eine Aushubbewegung der Abtriebswelle 3 jedoch nicht dargestellten Werkzeuggreifers durch Drehen des Schwenkantriebs 2 realisierbar ist. Das eine Ende 3.1 der Abtriebswelle 3 reicht durch eine Öffnung des Gehäuses G, wobei an dem Ende 3.1 der Werkzeuggreifer montierbar ist.
Das in die Vertiefung 2.1 eingreifende Element 4 wird entlang einer Linearführung 5 in Form eines Schlittens 5 auf einer Profilschiene 5.1 geführt. Die Abtriebswelle 3 ist drehbar in dem eingreifenden Element gelagert und kann durch dieses die Aushubbewegung umsetzen derart, dass bei einer Drehung des Schwenkantriebs 2 das eingreifende Element 4 mittels der in dem Umfang des Schwenkantriebs 2 eingebrachten Vertiefung 2.1 entlang der Linearführung 5 verfahrbar ist.
Die Vertiefung 2.1 ist in Form einer Nutkurve 2.1 für den Aushubvorgang des Werkzeugs auf dem Umfang des Schwenkantriebs 2 eingebracht. Vorteilhafter Weise ist die Nut für einen ruckfreien Bewegungsablauf in Form einer definierten Funktion ausgebildet. Zur Vermeidung von Erschütterungen beim Anfahren der Endlagen der Nutkurve, ist die Nutkurve im Bereich der Endlagen verlängert. An der Rückseite des Gehäuses G sind Hydraulikanschlüsse 6 für den hydraulischen Schwenkantrieb 2 vorgesehen.

In Figur 2 ist die Werkzeugwechseleinrichtung 1 im Gesamten zur Montage auf einer Linearführung dargestellt. Die Werkzeugwechseleinrichtung 1 weist das Gehäuse G auf, an dessen Stirnseite der drehbar gelagerte Werkzeuggreifer 7 mit einem links- und rechtsseitig angeordneten Greifelement 7.1 angeordnet ist. Der Schwenkantrieb mit der zugehörigen Getriebeanordnung ist vollständig im Gehäuse G angeordnet.

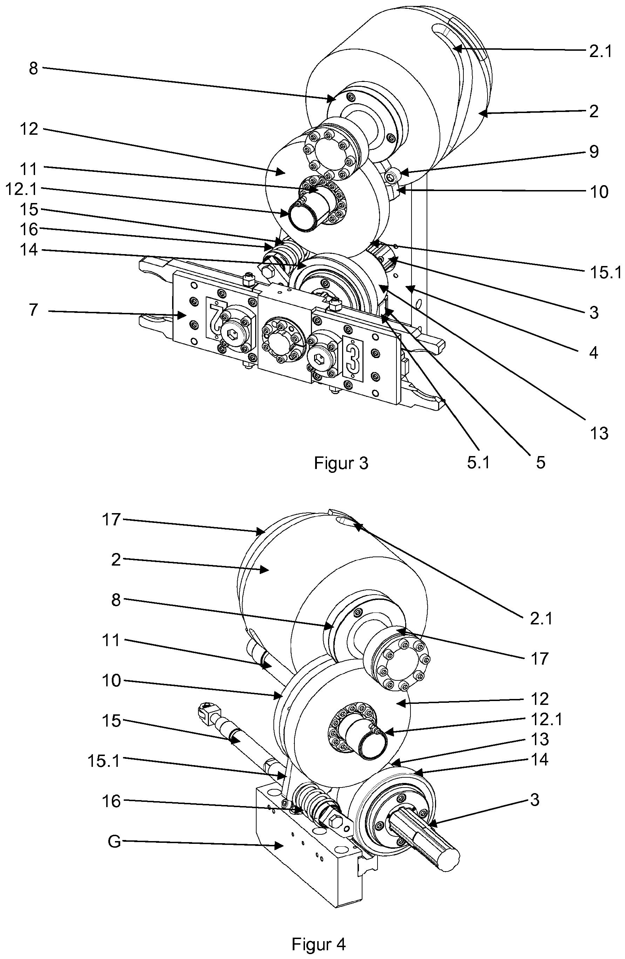

Das im Inneren des Gehäuses G angeordnete Getriebe zur Weiterleitung der Schwenk- und Aushubbewegung des Schwenkantriebs 2 auf den Werkzeuggreifer 7 ist in Figur 3 dargestellt. Der Schwenkantrieb 2 weist an seiner Stirnseite eine koaxial liegende Rastsicherung 8 und einen exzentrisch angeordneten Mitnehmer 9 auf. Der Mitnehmer 9 ist derart ausgebildet, dass er bei einer Drehbewegung des Schwenkantriebs 2 in ein unterhalb des Schwenkantriebs 2 angeordnetes drehbar gelagertes Malteserrad 10 eingreift. Das Malteserrad 10 ist auf einer Übertragungswelle 11 angeordnet. Koaxial zum dem Malteserrad 10 ist beabstandet, einen Spalt bildend, ein Zahnrad 12 mit einer Wellenmutter 12.1 angeordnet, welches die in die Übertragungswelle 11 eingeleitete Drehbewegung auf ein auf der Abtriebswelle 3 angeordnetes Ritzel 13 überträgt. Am aus dem Gehäuse heraus weisenden Ende 3.1 der Abtriebswelle 3 ist der Werkzeuggreifer 7 angeordnet, wobei die Abtriebswelle 3 mit einem Lager 14 in dem Gehäuse gelagert ist. Eine gedrehte Ansicht aus Figur 3 ist in Figur 4 dargestellt. Für eine bessere Übersichtlichkeit ist der Werkzeuggreifer nicht dargestellt. Parallel zu der Abtriebswelle 3 ist eine Schaltwelle 15 mit einer im endseitigen Bereich montierten Schaltgabel 15.1 angeordnet, wobei die Schaltgabel 15.1 zwischen dem Zahnrad 12 und dem Malteserrad 10 in dem Spalt eingreift. Die Schaltgabel 15.1 bewirkt durch eine Aushubbewegung entlang der Schaltwelle 15 ein Ausrücken der Übertragungswelle 11 und den darauf angeordneten Getriebeelementen Malteserrad 10 und Zahnrad 12. Das Zahnrad 12 ist auf dem Ritzel 13 ausrückbar angeordnet, bleibt jedoch in Eingriff mit diesem.
Die Schaltwelle 15 ist mittels einer sich an dem Gehäuse G abstützenden Rückstellfeder 16 in den Ausgangszustand rückstellbar.

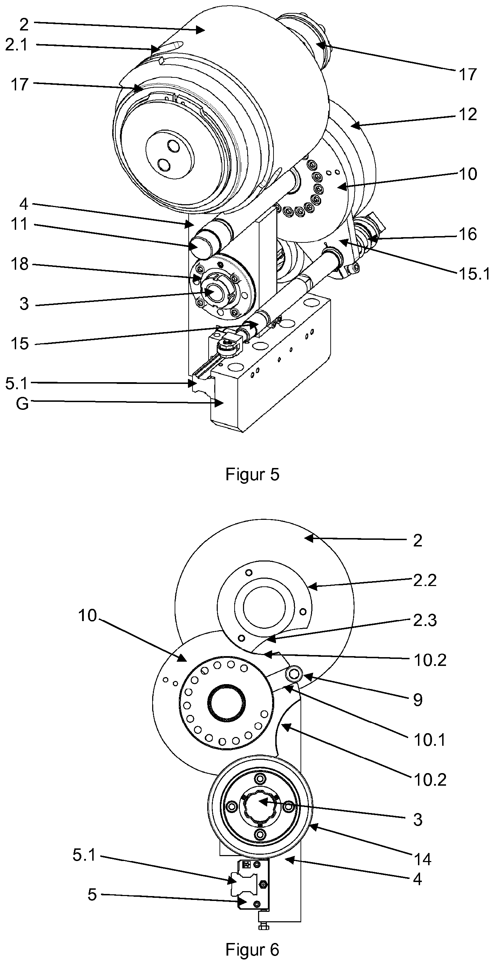

Figur 5 zeigt eine weitere Ansicht der in Figur 3 und 4 dargestellten Anordnung. Der Schwenkantrieb 2 ist an seinem ersten und zweiten Ende mittels zweier Lager 17, beispielsweise Kugellagern, in dem Gehäuse G gelagert. Das eingreifende Element 4 weist zudem eine Lagerung 18 zur Aufnahme eines Endes der Abtriebswelle 3 auf.

Eine Vorderansicht der Verbindung Schwenkantrieb 2, Malteserrad 10 und Ritzel 13 ist in der Figur 6 dargestellt, wobei das vor dem Malteserrad 10 angeordnete Zahnrad sowie die Rastsicherung nicht dargestellt sind. Das Malteserrad 10 weist eine vom Rand in Richtung der Übertragungswelle 11 weisende Aussparung 10.1 auf, in die der an dem Schwenkantrieb 2 stirnseitig angeordnete Mitnehmer 9 eingreift. Durch das Eingreifen des Mitnehmers 9 wird eine Drehbewegung auf das Malteserrad 10 übertragen und auf die Übertragungswelle 11 weitergeleitet. Das Malteserrad 10 weist an seinem Umfang des Weiteren zwei teilkreisförmige Ausnehmungen 10.2 auf, die mit einer im Bereich des Mitnehmers 9 an einem Absatz 2.2 des Schwenkantrieb 2 angeordneten teilkreisförmigen Aussparung 2.3 zusammenwirken derart, dass nur zwischen dem Mitnehmer 9 und dem Malteserrad 10 eine Verbindung und Weiterleitung der Drehbewegung erfolgt.

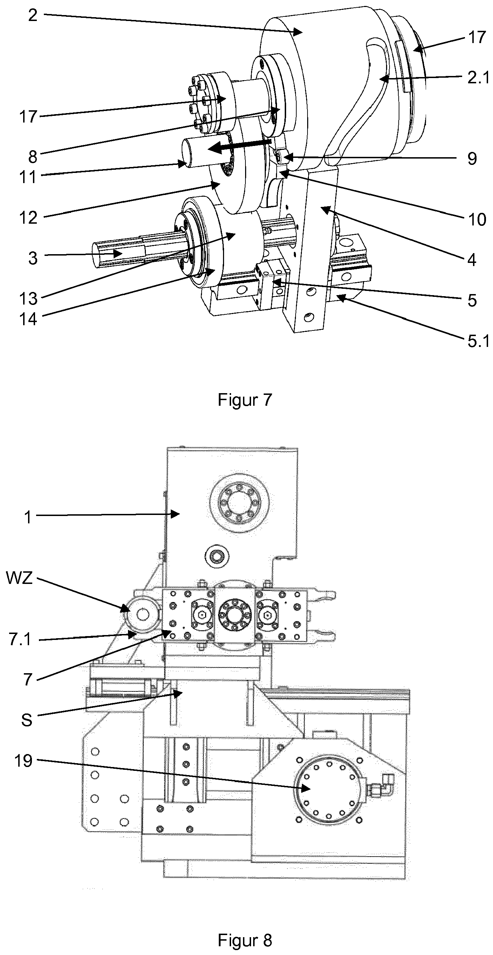

Die Werkzeugwechseleinrichtung weist eine Nockensteuerung auf, wobei über die Nockensteuerung eine Verschiebung des geradverzahnten Zahnrads 12 auf dem Ritzel 13 mittels der Schaltwelle 15 mit Schaltgabel 15.1 möglich ist. Die Schaltgabel 15.1 bewirkt das axiale Ausrücken des Malteserrads sowie des damit verbundenen Zahnrads. Der diesbezügliche Schaltvorgang ist in Figur 7 dargestellt. Durch den genannten Schaltvorgang kann das Malteserrad auf der durchgehenden Rastsicherung 8 gesichert werden, sodass der an dem Schwenkantrieb stirnseitig befestigte Mitnehmer 9 nicht in das Malteserrad 10 eingreifen kann. Somit kann der Schwenkantrieb 2 eine Aushubbewegung bis zu einem definierten Punkt durchführen und danach in die entgegengesetzte Drehrichtung in seine Ausgangslage zurückkehren.

Eine auf einem in x-Richtung verfahrbaren Schlitten S montierte Werkzeugwechseleinrichtung 1 ist in Figur 8 dargestellt. Der Schlitten S ist vorzugsweise mittels eines weiteren separaten hydraulischen Antriebs 19 verfahrbar. Der Werkzeuggreifer 7 ist mit einem linksseitig in das Greifelement 7.1 eingelegten Werkzeug WZ dargestellt.

### Bezugszeichenliste

- 1: Werkzeugwechseleinrichtung
- 2: Schwenkantrieb
- 2.1: Vertiefung/Nutkurve
- 2.2: Absatz
- 2.3: Teilkreisförmige Aussparung
- 3: Abtriebswelle
- 4: Eingreifendes Element
- 5: Linearführung
- 5.1: Profilschiene
- 6: Hydraulikanschluss
- 7: Werkzeuggreifer
- 7.1: Greifelement
- 8: Rastsicherung
- 9: Mitnehmer
- 10: Malteserrad
- 10.1: Aussparung
- 10.2: Teilkreisförmige Ausnehmung
- 11: Übertragungswelle
- 12: Zahnrad
- 12.1: Wellenmutter
- 13: Ritzel
- 14: Lager
- 15: Schaltwelle
- 15.1: Schaltgabel
- 16: Rückstellfeder
- 17: Lager
- 18: Lager
- G: Gehäuse

## Patentansprüche

1. Werkzeugwechseleinrichtung für eine Werkzeugmaschine, aufweisend einen hydraulischen Schwenkantrieb (2) und einen Werkzeuggreifer (7), **dadurch gekennzeichnet, dass** der Schwenkantrieb (2) an seinem Umfang eine zumindest bereichsweise umlaufende Vertiefung (2.1) aufweist, wobei bei einer Drehbewegung des Schwenkantriebs (2) mittels eines in die Vertiefung (2.1) eingreifenden Elements (4) eine Wechselwirkung entsteht derart, dass eine Aushubbewegung auf eine translatorisch und rotatorisch bewegliche Abtriebswelle (3) übertragbar ist, wobei der Werkzeuggreifer (7) direkt oder indirekt mit der Abtriebswelle (3) verbunden ist und dass mittels eines stirnseitig an dem Schwenkantrieb (2) befindlichen Mitnehmers (9), der in ein Malteserrad (10) eingreift, die Schwenkbewegung auf den Werkzeuggreifer (7) übertragbar ist und dass das Malteserrad (10) auf einer Rastsicherung (8) verschiebbar ist derart, dass die Rastsicherung (8) außerhalb des Schwenkvorgangs ein Drehen des Werkzeuggreifers (7) verhindert.

2. Werkzeugwechseleinrichtung nach Anspruch 1, **dadurch gekennzeichnet, dass** das in der Vertiefung (2.1) geführte eingreifende Element (4) mit einer Linearführung (5) verbunden ist.

3. Werkzeugwechseleinrichtung nach Anspruch 1 und 2, **dadurch gekennzeichnet, dass** die Vertiefung (2.1) in Form einer Nutkurve für den Aushubvorgang des Werkzeugs auf dem Umfang des Schwenkantriebs (2) eingebracht ist, wobei die Nut (2.1) für einen ruckfreien Bewegungsablauf in Form einer definierten Funktion ausgebildet ist.

4. Werkzeugwechseleinrichtung nach Anspruch 3, **dadurch gekennzeichnet, dass** die Nutkurve (2.1) im Bereich der Endlagen verlängert ist.

5. Werkzeugwechseleinrichtung nach einem der Ansprüche 1 bis 4, **dadurch gekennzeichnet, dass** das Malteserrad (10) mit einem beabstandet koaxial liegenden Zahnrad (12) auf einer Übertragungswelle (11) angeordnet ist, wobei eine Schwenkbewegung mittels des Zahnrads (12) auf ein, auf der Abtriebswelle (3) angeordnetes Ritzel (13) übertragbar ist derart, dass die Abtriebswelle (3) translatorisch und rotatorisch beweglich ist.

6. Werkzeugwechseleinrichtung nach einem der Ansprüche 1 bis 5, **dadurch gekennzeichnet, dass** die Schwenkbewegung des Werkzeuggreifers (7) durch das Eingreifen des Mitnehmers (9) in das Malteserrad (10) einleitbar ist.

7. Werkzeugwechselvorrichtung nach einem der Ansprüche 1 bis 6, **dadurch gekennzeichnet, dass** über eine Druckfeder (16) das Zahnrad (12) und/oder Malteserrad (10) automatisch zurücksetzbar ist.

8. Werkzeugwechseleinrichtung nach einem der Ansprüche 1 bis 7, **dadurch gekennzeichnet, dass** das Zahnrad (12) mittels einer Nockensteuerung ein auf dem Ritzel (13) mittels einer Schaltwelle (15) mit Schaltgabel (15.1) verschiebbar ist, wobei das Malteserrad (10) derart mit dem geradverzahnten Zahnrad (12) verbunden ist, dass das Malteserrad (10) axial um den Betrag des geradverzahnten Zahnrads (12) verschiebbar ist.

9. Werkzeugwechseleinrichtung nach einem der Ansprüche 1 bis 8, **dadurch gekennzeichnet, dass** das Malteserrad (10) auf einer durchgehenden Rastsicherung (8) sicherbar ist derart, dass der Mitnehmer (9) nicht in das Malteserrad (10) eingreifen kann.

10. Werkzeugwechseleinrichtung nach einem der Ansprüche 1 bis 9, **dadurch gekennzeichnet, dass** mittels eines axial versetzten Nockens die Zange des Werkzeuggreifers entriegelbar ist.
